# EUROPÄISCHE PATENTSCHRIFT

(11) **EP 0 536 740 B1**
(45) Veröffentlichungstag und Bekanntmachung des Hinweises auf die Patenterteilung: **27.03.1996**
(21) Anmeldenummer: 92117181.5
(22) Anmeldetag: 08.10.1992
(51) Int. Cl.: F16L 27/12

(54) **Teleskoprohr für Sprinkleranlagen**
Telescopic pipe for sprinkler systems
Tube télescopique pour installations d'arrosage

(30) Priorität: 09.10.1991 DE 9112536 U; 09.10.1991 EP 91117176
(43) Veröffentlichungstag der Anmeldung: 14.04.1993
(73) Patentinhaber: Vieregge, Uwe, D-63584 Gründau (DE)
(72) Erfinder: Vieregge, Uwe, D-63584 Gründau (DE)
(74) Vertreter: Stoffregen, Hans-Herbert, Dr. Dipl.-Phys.

(56) Entgegenhaltungen:
- EP-A- 0 428 120
- FR-A- 2 654 797
- GB-A- 839 914
- GB-A- 1 348 307
- US-A- 3 783 178

## Beschreibung

Die Erfindung bezieht sich auf ein Teleskoprohr für Sprinkleranlagen umfassend ein Außenrohr und ein zu diesem verstellbares und mit diesem über ein Befestigungselement fixierbares Innenrohr, dessen im Überlappungsbereich des Außenrohres liegende Ende zu einem Wulstrand aufgeweitet ist, sowie ein das Innenrohr gegenüber dem Außenrohr abdichtendes Dichtungsmittel, wobei das Außenrohr einerseits an seinem Ende das Befestigungsmittel aufweist, das mit dem Innenrohr in lösbarem Eingriff steht, und andererseits anschlußseitig eine Einschnürung aufweist.

Ein entsprechendes Teleskoprohr ist der EP 0 428 120 A2 zu entnehmen. Um das Außenrohr zu dem Innenrohr zu verstellen und sodann fixieren zu können, ist als lösbares Befestigungsmittel eine Überwurfmutter vorgesehen, die auf das Außenrohr aufgeschraubt und mit einem Ringflansch versehen ist, dessen lichter Durchmesser kleiner als eine wulstartige Erweiterung des Innenrohrs ist. Hierdurch ist sichergestellt, daß ein ungewolltes Herausgleiten des Innenrohrs aus dem Außenrohr bei aufgeschraubter Überwurfmutter ausgeschlossen ist.

Nachteilig einer Befestigung in Form einer Überwurfmutter ist, daß diese zu fest oder zu lose angezogen werden kann. Letzteres führt dazu, daß das Innenrohr weiterhin zu dem Außenrohr verstellbar ist, wodurch eine bestimmungsgemäße Verwendung eines entsprechenden Teleskoprohrs unmöglich wird.

Bei einem zu festen Anziehen der Überwurfmutter ist zwar eine entsprechende Relativbewegung nicht mehr möglich. Allerdings besteht dann die Gefahr, daß eine bleibende Beschädigung der Überwurfmutter bzw. deren Gewindes und des Gewindes des Außenrohrs erfolgt, so daß ein erneutes Lösen und Anziehen zur weiteren Justage des Teleskoprohrs nicht möglich ist.

Der vorliegenden Erfindung liegt die Aufgabe zugrunde, ein Teleskoprohr der zuvor beschriebenen Art so weiterzubilden, daß mit konstruktiv einfachen Maßnahrnen eine Längenänderung möglich ist, wobei auch bei häufiger Justage sichergestellt ist, daß eine sichere Befestigung zwischen dem Innen- und Außenrohr erfolgt.

Die Aufgabe wird erfindungsgemäß dadurch gelöst, daß das Befestigungsmittel ein Stellring ist, der in einer Aufweitung am Ende des Außenrohrs unverlierbar angeordnet ist, wobei das Innenrohr im Stellring lösbar fixiert ist.

Erfindungsgemäß wird mit einfachen Maßnahmen ein Verbinden zwischen Außen- und Innenrohr sichergestellt, wobei der unverlierbar angeordnete Stellring sicherstellt, daß das Innenrohr nicht aus dem Außenrohr herausgleiten kann.

Eine Weiterbildung der Erfindung sieht vor, daß zur lösbaren Fixierung von Innen- und Außenrohr ein Gewindestift in dem Stellring angeordnet ist, wobei eine an der Spitze des Gewindestifts angeformte Ringschneide in die Oberfläche des Innenrohrs einpreßbar ist. Durch diese Maßnahme ist sichergestellt, daß auch nach häufigem Lösen bzw. Fixieren des Innenrohrs ein sicheres Befestigen erfolgen kann.

Weiterbildungen der Erfindung ergeben sich aus den Unteransprüchen.

Die Erfindung wird nachstehend anhand von der Zeichnung zu entnehmenden Ausführungsbeispielen näher erläutert.

Es zeigen:
- Fig. 1: einen Längsschnitt durch eine erste Ausführungsform eines Teleskoprohrs und
- Fig. 2: eine zweite Ausführungsform eines Teleskoprohrs.

In den Fig., in denen gleiche Elemente mit gleichen Bezugszeichen versehen sind, ist in ein Außenrohr (1) ein am Ende mit einer Wulst (6) versehenes Innenrohr (13) eingeschoben. Die Wulst (6) bewirkt, daß ein definierter Spalt (11) zwischen dem Innenrohr (13) und dem Außenrohr (1) eingestellt wird, wobei in diesem Spalt der Wulstrand (6) ungehindert verschoben werden kann. Eine Begrenzung der Beweglichkeit des Teleskoprohres ist dadurch gegeben, daß am Ende der Aufweitung des Außenrohrs (1) der Wulstrand (6) gegen eine sich einschnürende Wandung (E1) stößt.

Eine gegenüberliegende Begrenzung der Verschiebbarkeit ist durch Anschläge zwischen Wulst (6) und Innenkante eines Stellringes (15) gegeben. Dieser ist im Außenrohr (1) in einer Aufweitung (16) angeordnet, die sich unmittelbar am Ende eines Rohrabschnitts I befindet.

Der Abschnitt I gibt den Verstellbereich an, wobei eine Absicherung gegen unbeabsichtigtes Herausfallen wie oben beschrieben erfolgt. Der Stellring (15) wird nach dem Einlegen in das Rohr durch Umbördeln bzw. Zudrücken des Randes gesichert.

Eine Abdichtung zwischen dem Innenrohr (13) und dem Außenrohr (11) erfolgt über ein Dichtungsmittel (19), welches lose in einer Dichtungskammer in Form einer Nut (18) in der Wulst (6) verläuft.

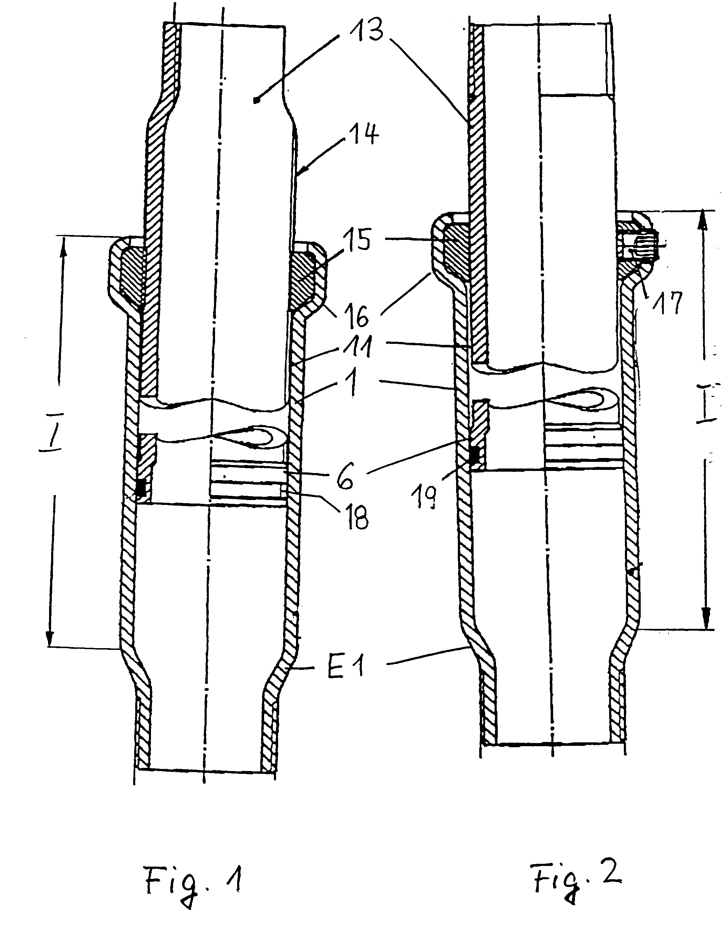

Das Ausführungsbeispiel nach Fig. 1 besitzt ein Außengewinde (14) auf dem Innenrohr (13), das aufgerollt ist. Dementsprechend ist ein Gewinde im Stellring (15) mit einem Gewindeschneider derart eingearbeitet, daß auch bei hohen Drücken keine unbeabsichtigte Verstellung des Teleskoprohres erfolgt. Beispielsweise kann ein Gewinde mit doppelter Steigung oder ein selbsthemmendes Trapezprofil verwendet werden.

Bei dem Ausführungsbeispiel nach Fig. 2 besitzt die Passung zwischen dem Innenrohr (13) und Stellring (15) dichtende Funktion. Bei einem Außenrohr (1) mit einem Innendurchmesser von 36 mm ist der Innendurchmesser des Stellrings (15) und der Außendurchmesser des Innenrohrs (13) 34 mm.

Zur lösbaren Fixierung von Innenrohr (13) und Außenrohr (1) ist nach dem Ausführungsbeispiel der Fig. 2 ein Gewindestift (17) in dem Stellring (15) angeordnet, wobei eine an der Spitze des Gewindestifts (17) angeformte Ringschneide in die Oberfläche des Innenrohrs (13) einpreßbar ist.

## Patentansprüche

1. Teleskoprohr für Sprinkleranlagen umfassend ein Außenrohr (1) und ein zu diesem verstellbares und mit diesem über ein Befestigungselement (15, 17) fixierbares Innenrohr (13), dessen im Überlappungsbereich des Außenrohres liegende Ende zu einem Wulstrand (6) aufgeweitet ist, sowie ein das Innenrohr gegenüber dem Außenrohr abdichtendes Dichtungsmittel (19), wobei das Außenrohr einerseits an seinem Ende das Befestigungsmittel aufweist, das mit dem Innenrohr in lösbarem Eingriff steht, und andererseits anschlußseitig eine Einschnürung (E1) aufweist,
**dadurch gekennzeichnet**,
daß das Befestigungsmittel ein Stellring (15) ist, der in einer Aufweitung (16) am Ende des Außenrohrs (1) unverlierbar angeordnet ist, wobei das Innenrohr (13) im Stellring (15) lösbar fixiert ist.

2. Teleskoprohr nach Anspruch 1,
**dadurch gekennzeichnet**,
daß zur lösbaren Fixierung von Innen- und Außenrohr (13, 1) ein Gewindestift (17) in dem Stellring (15) angeordnet ist, wobei eine an der Spitze des Gewindestifts (17) angeformte Ringschneide in die Oberfläche des Innenrohrs (13) einpreßbar ist.

3. Teleskoprohr nach Anspruch 1 oder 2,
**dadurch gekennzeichnet**,
daß am Ende des Innenrohrs (13) im Bereich des Wulstrandes (6) eine Nut (18) für das Dichtungsmittel (19) angeordnet ist.

4. Teleskoprohr nach einem der vorhergehenden Ansprüche,
**dadurch gekennzeichnet**,
daß der Spalt zwischen Innen- und Außenrohr (13, 1) vom Dichtungsmittel (19) abgedichtet ist.

5. Teleskoprohr nach einem der vorhergehenden Ansprüche,
**dadurch gekennzeichnet**,
daß das Innenrohr (13) und/oder das Außenrohr (1) als Präzisionsrohr aus Stahl ausgebildet ist.

6. Teleskoprohr nach einem der vorhergehenden Ansprüche,
**dadurch gekennzeichnet**,
daß das Innenrohr (13) ein Außengewinde (14) trägt, das mit einem Innengewinde des Stellrings (15) in Eingriff steht.

## Claims

1. Telescopic pipe for sprinkler systems comprising an outer pipe (1) and an inner pipe (13), which is adjustable and fixable relative to the outer pipe by means of a fastening element (15, 17) and whose end lying in the overlap region of the outer pipe is widened to form a beaded edge (6), as well as a sealing means (19) sealing off the inner pipe relative to the outer pipe, the outer pipe at one end having the fastening element, which is in detachable contact with the inner pipe, and at the other connection end having a throat (E1),
characterized in that
the fastening means is a setting collar (15) which is disposed in a captive manner in a socket (16) at the end of the outer pipe, the inner pipe (13) being detachably fixed in the setting collar (15).

2. Telescopic pipe according to claim 1,
characterized in that
a threaded pin (17) is disposed in the setting collar (15) for releasably fixing the inner and outer pipes (13, 1), a cupped point formed on the tip of the threaded pin (17) being pressable into the surface of the inner pipe (13).

3. Telescopic pipe according to claim 1 or 2,
characterized in that
a groove (18) for the sealing means (19) is disposed at the end of the inner pipe (13) in the region of the beaded edge (6).

4. Telescopic pipe according to one of the preceding claims,
characterized in that
the gap between inner and outer pipe (13, 1) is sealed by the sealing means (19).

5. Telescopic pipe according to one of the preceding claims,
characterized in that
the inner pipe (13) and/or the outer pipe (1) takes the form of a precision pipe made of steel.

6. Telescopic pipe according to one of the preceding claims,
characterized in that
the inner pipe (13) carries an external thread (14) which is engaged with an internal thread of the setting collar (15).

## Revendications

1. Tube télescopique pour installations d'arrosage anti-incendie, comprenant un tube extérieur (1) et un tube intérieur (13) ajustable par rapport à celui-ci, qui peut être fixé à celui-ci par un élément de fixation (15, 17), et dont l'extrémité située dans la région de recouvrement par le tube extérieur est élargie en un bord en bourrelet (6), ainsi qu'un moyen d'étanchéité (19) assurant l'étanchéité du tube intérieur par rapport au tube extérieur, tandis que le tube extérieur présente, d'une part, à son extrémité le moyen de fixation qui s'engage de manière libérable sur le tube intérieur, et présente, d'autre part, un rétrécissement (E1) du côté du raccordement, caractérisé en ce que le moyen de fixation est une bague de pose (15) qui est disposée de manière à ne pas pouvoir se perdre dans un élargissement (16) de l'extrémité du tube extérieur (1), tandis que le tube intérieur (13) est fixé de manière libérable dans la bague de pose (5).

2. Tube télescopique selon la revendication 1, caractérisé en ce qu'en vue de la fixation libérable du tube intérieur et du tube extérieur (13, 1), une tige filetée (17) est disposée dans la bague de pose (15), tandis qu'une découpe annulaire formée à la pointe de la tige filetée (17) peut être repoussée dans la surface du tube intérieur (13).

3. Tube télescopique selon la revendication 1 ou 2, caractérisé en ce qu'à l'extrémité du tube intérieur (13), une rainure (18) pour le moyen d'étanchéité (19) est disposée dans la région du bord en bourrelet (6).

4. Tube télescopique selon l'une des revendications précédentes, caractérisé en ce que l'interstice entre le tube intérieur et le tube extérieur (13, 1) est rendu étanche par le moyen d'étanchéité (19).

5. Tube télescopique selon l'une des revendications précédentes, caractérisé en ce que le tube intérieur (13) et/ou le tube extérieur (1) sont configurés comme tubes de précision en acier.

6. Tube télescopique selon l'une des revendications précédentes, caractérisé en ce que le tube intérieur (13) porte un filet extérieur (14) qui s'engage dans le filet intérieur de la bague de pose (15).
